(19) Europäisches Patentamt
European Patent Office
Office européen des brevets

(11) EP 1 231 595 A1

(12) **EUROPÄISCHE PATENTANMELDUNG**

(43) Veröffentlichungstag:
**14.08.2002 Patentblatt 2002/33**

(51) Int Cl.$^7$: **G10L 15/18**

(21) Anmeldenummer: **02100120.1**

(22) Anmeldetag: **08.02.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **13.02.2001 DE 10106580**

(71) Anmelder:
- **Philips Corporate Intellectual Property GmbH 52066 Aachen (DE)**
  Benannte Vertragsstaaten:
  **DE**
- **Koninklijke Philips Electronics N.V. 5621 BA Eindhoven (NL)**
  Benannte Vertragsstaaten:
  **DE FR GB**

(72) Erfinder: **Peters, Jochen 52066, Aachen (DE)**

(74) Vertreter: **Volmer, Georg, Dipl.-Ing. et al Philips Corporate Intellectual Property GmbH, Weisshausstrasse 2 52066 Aachen (DE)**

(54) **Trainingsmethode für die freien Parameter eines Maximum-Entropie-Sprachmodells**

(57) Die Erfindung betrifft ein Spracherkennungssystem und ein Verfahren zum Berechnen von Iterationswerten für freie Parameter $\lambda\alpha$ des Maximum-Entropie-Sprachmodells. Es ist im Stand der Technik bekannt, diese freien Parameter $\lambda\alpha$ z.B. mit Hilfe eines GIS-Trainingsalgorithmus zyklisch iterativ zu approximieren. Zyklisch bedeutet in diesem Fall, dass bei jedem Iterationsschritt n eine zyklisch vorbestimmte Merkmalsgruppe Ai(n) des Sprachmodells zur Berechnung des n+1 Iterationswertes für die freien Parameter ausgewertet wird. Eine derartig starr zyklisch zugeordnete Merkmalsgruppe Ai(n) ist jedoch nicht immer am besten geeignet, den GIS-Trainingsalgorithmus in einer aktuellen Situation am schnellsten und effektivsten konvergieren zu lassen. Es wird deshalb erfindungsgemäß ein Verfahren zur Auswahl der in dieser Hinsicht am besten geeigneten Merkmalsgruppe vorgeschlagen, wobei der Grad der Anpassung von Iterationsrandwerten $m^{(n)}_\alpha$ an jeweils zugehörige gewünschte Randwerte $m\alpha$ für alle Merkmale der jeweiligen Merkmalsgruppe als Kriterium für die Auswahl der Merkmalsgruppe dient.

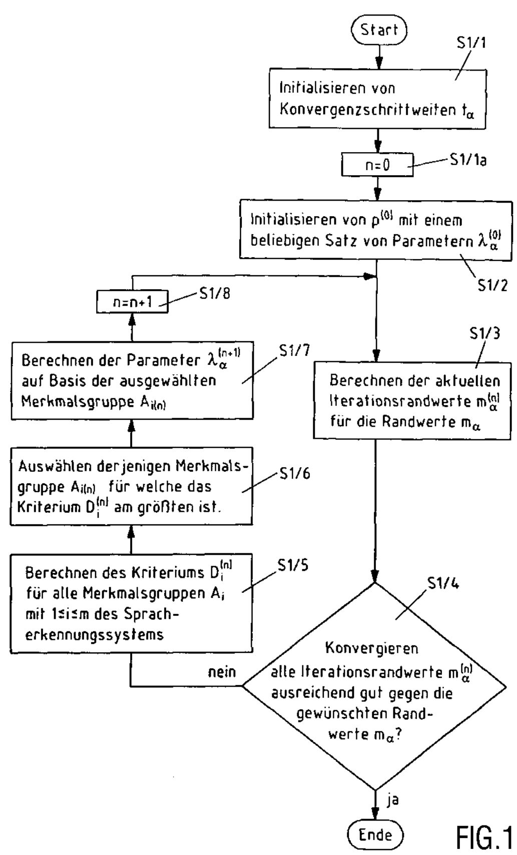

FIG.1

EP 1 231 595 A1

## Beschreibung

Die Erfindung betrifft ein Verfahren zum Berechnen von Iterationswerten für freie Parameter λ des Maximum-Entropie (ME)-Sprachmodells gemäß dem Oberbegriff des Patentanspruchs 1.

Die Erfindung betrifft weiterhin ein Spracherkennungssystem und eine Trainingseinrichtung, in welchen ein derartiges Verfahren realisiert ist.

Im Stand der Technik ist es bekannt, dass in einem (ME)-Sprachmodell sog freie Parameter λ definiert bzw. trainiert werden müssen. Ein bekannter Algorithmus zum Trainieren dieser freien Parameter λ ist der sog. Generalized Iterative Scaling (GIS)-Trainingsalgorithmus. Von diesem GIS-Trainingsalgorithmus sind mehrere Varianten bekannt; die vorliegende Erfindung betrifft allerdings nur eine sog. zyklische Variante, wonach freie Parameter λ iterativ wie folgt berechnet werden:

$$\lambda_\alpha^{(n+1)} = \lambda_\alpha^{(n)} + t_\alpha \cdot \log\left( \frac{m_\alpha}{m_\alpha^{(n)}} \cdot \frac{1 - \sum_{\beta \varepsilon A_{n(mod m)}} t_\beta . m_\beta^{(n)}}{1 - \sum_{\beta \varepsilon A_{n(mod m)}} t_\beta \cdot m_\beta} \right) \quad (1)$$

Bei dieser zyklischen Variante ist jedem Iterationswert n eine Merkmalsgruppe Ai mit i = n(mod m) von insgesamt m Merkmalsgruppen in dem Sprachmodell zugeordnet und die Iterationswerte $\lambda_\alpha^{(n+1)}$ werden jeweils für alle Merkmale α aus der aktuell zugeordneten Merkmalsgruppe Ai berechnet, bevor der Iterationsparameter n um 1 erhöht wird. Diese zyklische Variante des GIS-Trainingsalgorithmus ist z.B. offenbart in J.N. Darroch and D. Ratcliff "Generalized iterative scaling for log linear models", Annals Math. Stat., 43(5):1470-1480, 1972.

In der Formel (1) bezeichnet:

| | |
|---|---|
| n : | den Iterationsparameter; |
| m : | die Anzahl der insgesamt in dem Sprachmodell vordefinierten Merkmalsgruppen; |
| An(mod m) : | die dem Iterationsparameter n aktuell zugeordnete Merkmalsgruppe; |
| α : | ein bestimmtes Merkmal aus der Merkmalsgruppe An(mod m); |
| β : | alle Merkmale aus der Merkmalsgruppe An(mod m); |
| $\lambda_\alpha^{(n)}$ : | den n'ten Iterationswert für den freien Parameter λα; |
| tα, tβ : | Konvergenzschrittweiten; |
| mα, mβ : | gewünschte Randwerte in dem Sprachmodell; und |
| $m_\alpha^{(n)}$ $m_\beta^{(n)}$ : | n'te Iterationsrandwerte für die gewünschten Randwerte mα bzw. mβ. |

Einige der soeben vorgestellten Parameter in der Formel (1) werden nachfolgend näher erläutert:

Der zyklischen Variante des GIS-Trainingsalgorithmus gemäß Formel (1) liegt der Gedanke zugrunde, dass alle in dem ME-Sprachmodell vorbestimmten Merkmale einzelnen Merkmalsgruppen Ai zugeordnet sind, von denen insgesamt m in dem Sprachmodell definiert sind Ein Beispiel für ein Sprachmodell mit insgesamt m = 3 vordefinierten Merkmalsgruppen Ai mit i = 1 ... 3 ist in Fig 5 anschaulich dargestellt. Merkmale können dabei allgemein einzelne Worte, Wortfolgen, Wortklassen, Folgen von Wortklassen oder komplexere Muster bezeichnen. So umfasst in Fig 5 die Merkmalsgruppe A1 Worte, z.B. das Wort "House" und Wortfolgen, z.B. "The Green". Demgegenüber umfasst die Merkmalsgruppe A3 einzelne Wortklassen, z.B. "Adjektive" oder "Substantive" und Folgen von Wortklassen, z.B. "Adverb - Verb".

Bei der bekannten zyklischen Berechnung der freien Parameter λα gemäß Formel (1) ist jedem Iterationsparameter n eine Merkmalsgruppe Ai = An(mod m), d.h. gemäß modulo m fest zugeordnet. Diese starre zyklische Zuordnung hat folgenden Nachteil:

Sie lässt keinen Raum für eine gezielte Anpassung des GIS-Trainingsalgorithmus auf diejenigen Merkmalsgruppen, bei welchen noch ein großer Korrekturbedarf besteht. So kann es passieren, dass bei einem nachfolgenden Iterationsschritt iterative Randwerte, welche bei einem vorherigen Iterationsschritt bereits gut an den zugeordneten gewünschten Randwert angspasst waren, keine großen λ-Korrekturen benötigen. Die Korrektur anderer Parameter wäre hier von Vorteil.

Es werden deshalb bei der traditionellen zyklischen Variante unnötig viele Iterationsschritte durchgeführt, um eine gute Abschätzung der gewünschten Randwerte und der gewünschten freien Parameter λ zu erzielen

Ausgehend von diesem Stand der Technik ist es die Aufgabe der Erfindung ein Spracherkennungssystem, eine Trainingseinrichtung und ein Verfahren zum Berechnen von Iterationswerten für freie Parameter λ des ME-Sprachmodells derart weiterzubliden, dass die iterative Berechnung effektiver und schneller wird.

Diese Aufgabe wird durch das in Patentanspruch 1 beanspruchte Verfahren gelöst.

Demnach wird die Aufgabe dadurch gelöst, dass dem aktuellen Iterationsparameter n jeweils diejenige Merkmalsgruppe Ai(n) mit 1 ≤ i(n) ≤ m zugeordnet wird, für welche, gemäß einem vorbestimmten Kriterium, die Anpassung der Iterationswerte $m_\alpha^{(n)}$ an die jeweils zugehörigen gewünschten Randwerte mα am schlechtesten im Vergleich zu allen m Merkmalsgruppen des Sprachmodells erfüllt ist.

Aufgrund dieser erfindungsgemäßen Zuordnung von Merkmalsgruppen Ai(n) zu einzelnen Iterationsparametern/Iterationsschritten n wird ein besseres Konvergenzverhalten des GIS-Trainingsalgorithmus zur Approximation der freien Parameter λ erzielt. Die iterative Berechnung der freien Parameter λ ist jetzt nicht mehr als zyklisch zu bezeichnen, weil die Zuordnung von Merkmalsgruppen Ai(n) zu dem Iterationsparameter n nicht mehr zyklisch, sondern gemäß einem individuell zu berechnenden Kriterium erfolgt. Im Vergleich zur zyklischen Version hat diese erfindungsgemäße azyklische Berechnung den Vorteil einer effektiveren und schnelleren Berechnung der gewünschten Iterationswerte für die freien Parameter λ.

Gemäß dem in Patentanspruch 2 beschriebenen ersten Ausführungsbeispiel der Erfindung erfolgt vor jeder Erhöhung des Iterationsparameters n die Berechnung des Kriteriums zur Auswahl der am besten für den Iterationsparameter n geeigneten Merkmalsgruppe Ai gemäß folgender Gleichung:

$$D_i^{(n)} = \left[ \sum_{\alpha \varepsilon A_i} t_\alpha \cdot m_\alpha \log\left(\frac{m_\alpha}{m_\alpha^{(n)}}\right) + \left(1 - \sum_{\alpha \varepsilon A_i} t_\alpha \cdot m_\alpha\right) \log\left(\frac{1 - \sum t_\alpha \cdot m_\alpha}{1 - \sum t_\alpha \cdot m_\alpha^{(n)}}\right) \right]$$

Der Index der ausgewählten Merkmalsgruppe wird anschließend folgendermaßen festgelegt:

$$i(n) = \arg\max_j D_j^{(n)}$$

Vorteilhafterweise hat der GIS-Trainingsalgorithmus zur iterativen Berechnung der freien Parameter λ - und damit die mathematische Funktion G( ) in Patentanspruch 1 -folgende Gestalt:

$$\lambda_\alpha^{(n+1)} = G() = \lambda_\alpha^{(n)} + t_\alpha \cdot \log\left( \frac{m_\alpha}{m_\alpha^{(n)}} \cdot \frac{1 - \sum_{\beta \in Ai(n)} t_\beta . m_\beta^{(n)}}{1 - \sum_{\beta \in Ai(n)} t_\beta . m_\beta} \right), \qquad (1a)$$

wobei dieser Algorithmus im wesentlichen aus dem Stand der Technik bekannt ist und oben als Formel (1) beschrieben wurde. Wie in der zyklischen Version werden die freien Parameter λα gemäß Formel 1a angepasst. Hierbei werden alle Merkmale α der ausgewählten Gruppe Ai(n) behandelt.

Es ist vorteilhaft, wenn sowohl zur Berechnung des Kriteriums $D_i^{(n)}$ wie auch zur Berechnung der freien Parameter λ gemäß dem GIS-Trainingsalgorithmus eine spezielle Merkmalsfunktion fα, nämlich vorzugsweise eine orthogonalisierte Merkmalsfunktion $f_\alpha^{ortho}$ verwendet wird.

Die Verwendung der orthogonalisierten Merkmalsfunktion $f_\alpha^{ortho}$ bewirkt generell eine Verbesserung der Konvergenzgeschwindigkeit des GIS-Trainingsalgorithmus. Durch Verwendung der orthogonalisierten Merkmalsfunktion bei dem erfindungsgemäßen Verfahren ergibt sich eine zusätzlich erhöhte Konvergenzgeschwindigkeit für den GIS-Trainingsalgorithmus.

Weitere vorteilhafte Ausgestaltungen und Verwendungen des erfindungsgsmäßen Verfahrens sind Gegenstand der Unteransprüche.

Die Aufgabe der Erfindung wird weiterhin durch ein Spracherkennungssystem und durch eine Trainingseinrichtung auf Basis des Maximum-Entropie-Sprachmodells gemäß den Patentansprüchen 8 und 9 gelöst. Die Vorteile dieses Spracherkennungssystems und der Trainingseinrichtung entsprechen den Vorteilen, wie sie oben für das erfindungsgemäße Verfahren diskutiert wurden.

Es erfolgt eine detaillierte Beschreibung eines Ausführungsbeispiels der Erfindung unter Bezugnahme auf die folgenden Figuren, wobei

Fig. 1 ein Flussdiagramm zur Berechnung des Kriteriums zur Auswahl einer geeigneten Merkmalsgruppe Ai(n) für einen Iterationsparameter n gemäß der vorliegenden Erfindung;

Fig. 2 ein Verfahren zur Berechnung eines verbesserten orthogonalisierten Randwertes $m_{\alpha}^{ortho}$;

Fig. 3 ein Spracherkennungssystem gemäß der vorliegenden Erfindung; und

Fig. 4 ein Beispiel für Merkmalsgruppen in einem Sprachmodell (Stand der Technik) beschreibt.

Fig 1 veranschaulicht die einzelnen Verfahrensschritte eines erfindungsgemäßen Verfahrens zur Auswahl derjenigen Merkmalsgruppe Ai(n), welche zur Berechnung von Iterationswerten $\lambda_{\alpha}^{(n+1)}$ gemäß dem GIS-Trainingsalgorithmus am besten geeignet ist.

Das Verfahren gemäß Fig 1 sieht vor, dass in einem ersten Verfahrensschritt S1/1 zunächst Konvergenzschrittweiten t$\alpha$ initialisiert werden müssen. In Schritt S1/1a wird der Iterationsparameter n = 0 gesetzt.

Weiterhin ist die Wahrscheinlichkeit p(0) mit einem beliebigen Satz von Anfangsparametern $\lambda_{\alpha}^{(0)}$ zu initialisieren. Dabei bezeichnet p(0)(w|h) einen geeigneten Initialisierungs- oder Anfangswert für die Wahrscheinlichkeit, dass ein Wort w auf eine bisherige Wortfolge h (Historie) folgt (S1/2).

In Verfahrensschritt S1/3 sind die aktuellen Iterationsrandwerte $m_{\alpha}^{(n)}$ für ihre jeweiligen zugehörigen gewünschten Randwerte m$\alpha$, welche letzten Endes das gewünschte Sprachmodell definieren, zu berechnen, und zwar für alle in dem Sprachmodell vorbestimmten Merkmale $\alpha$.

Die gewünschten Randwerte m$\alpha$ legen folgende Randbedingungen für die gesuchte Wahrscheinlichkeitsverteilung p(wh) fest:

$$\sum_{(h,w)} N(h) \cdot p(w|h) \cdot f_{\alpha}(h,w) \overset{!}{=} m_{\alpha} , \qquad (2)$$

wobei

$N(h)$ : eine Häufigkeit der Historie h;
p(w|h) : die Wahrscheinlichkeit, mit welcher das Wort w auf die Historie h folgt; und
f$\alpha$(h, w) : eine Merkmalsfunktion für das Merkmal $\alpha$

bezeichnet.

Für das Schätzen geeigneter Randwerte sind im Stand der Technik verschiedene Ansätze bekannt.

Gemäß einem bekannten Ansatz ergibt sich der gewünschte Randwert m$\alpha$ für das Sprachmodell durch Anwendung der Merkmalsfunktion f$\alpha$ auf ein Trainingskorpus und anschließendes Glätten der daraus resultierenden Häufigkeiten. Dabei kann das Glätten z.B. durch Subtraktion eines Korrekturwertes von der ermittelten Häufigkeit N ($\alpha$) erfolgen.

Gemäß einer zweiten alternativen Methode erfolgt die Berechnung durch Reduktion von Merkmalsmengen in dem Sprachmodell so lange, bis die Randbedingungen keine Widersprüche mehr aufweisen. Eine derartige Reduktion von Merkmalsmengen muss in der Praxis sehr umfangreich sein, weil ansonsten das erzeugte Sprachmodell keine Lösung mehr zu der ursprünglichen Trainingsaufgabe darstellt.

Für die Merkmalsfunktion f$\alpha$ sind ebenfalls verschiedene Definitionen im Stand der Technik bekannt; sie wird normalerweise jedoch definiert zu:

$$f_{\alpha}(h,w) = \begin{cases} 1 & \text{wenn } \alpha \text{ die Wortfolge (h,w) korrekt beschreibt} \\ 0 & \text{sonst} \end{cases} \qquad (3)$$

Der n'te Iterationsrandwert $m_{\alpha}^{(n)}$ stellt eine iterative Näherung für die soeben definierten gewünschten Randwerte m$\alpha$ dar. Der n'te Iterationsrandwert $m_{\alpha}^{(n)}$ berechnet sich wie folgt:

$$m_{\alpha}^{(n)} = \sum_{(h,w)} N(h) \cdot p^{(n)}(w|h) \cdot f_{\alpha}(h,w) \qquad (4)$$

Diese Formel unterscheidet sich von der oben genannten Formel (2) lediglich dadurch, dass für die Wahrscheinlichkeit p(w|h) eine Approximation in Form des Iterationswertes p(n)(w|h) gewählt wird, wobei der Iterationswert p(n) wie folgt berechnet wird:

$$p(n)(w \mid h) = \frac{1}{Z^{(n)}(h)} \cdot \exp\left(\sum_{\alpha} \lambda_{\alpha}^{(n)} \cdot f_{\alpha}(h,w)\right) \tag{5}$$

$$Z(n)(h) = \sum_{w} \exp\left(\sum_{\alpha} \lambda_{\alpha}^{(n)} \cdot f_{\alpha}(h,w)\right) \tag{6}$$

wobei Z(n)(h) und die freien Parameter $\lambda_{\alpha}^{(n)}$ jeweils durch den GIS-Trainingsalgorithmus trainiert, d.h. iterativ approximiert werden.

Gemäß Verfahrensschritt S1/4 ist nach jedem Iterationsschritt zu prüfen, ob die berechneten Iterationsrandwerte $m_{\alpha}^{(n)}$ bereits mit einer gewünschten Genauigkeit gegen die gewünschten Randwerte mα konvergiert sind Sollte dies der Fall sein, so ist das erfindungsgemäße Verfahren beendet.

Solange dies jedoch noch nicht der Fall ist, ist vor jeder Erhöhung des Iterationsparameters um 1 (wieder) die Merkmalsgruppe Ai(n) mit dem größten Korrekturbedarf zu bestimmen; dies erfolgt erfindungsgemäß dadurch, dass die nachfolgend beschriebenen Verfahrensschritte S1/5 bis S1/7 erstmals bzw. wiederholt durchgeführt werden. Gemäß Verfahrensschritt S1/5 wird für alle Merkmalsgruppen Ai in dem Sprachmodell jeweils getrennt das Kriterium $D_i^n$ berechnet, welches ein Maß dafür ist, inwieweit die Iterationswerte $m_{\alpha}^n$ für Merkmale α der Gruppe Ai an die jeweils zugehörigen gewünschten Randwerte mα angepasst sind Das Kriterium wird mathematisch vorzugsweise wie folgt beschrieben:

$$D_i^{(n)} = \left[\sum_{\alpha \varepsilon A_i} t_{\alpha} \cdot m_{\alpha} \log\left(\frac{m_{\alpha}}{m_{\alpha}^{(n)}}\right) + \left(1 - \sum_{\alpha \varepsilon A_i} t_{\alpha} \cdot m_{\alpha}\right) \log\left(\frac{1 - \sum t_{\alpha} \cdot m_{\alpha}}{1 - \sum t_{\alpha} \cdot m_{\alpha}^{(n)}}\right)\right] \tag{7}$$

Dabei berechnet sich die Konvergenzschrittweite tα wie folgt:

$$t_{\alpha} = \frac{1}{M_i} \quad \text{mit} \quad M_i = \max_{(h,w)}\left(\sum_{\alpha \in A_i} f_{\alpha}(h,w)\right) \tag{8}$$

In bezug auf Formel (7) ist es wichtig zu erkennen, dass der Betrag von $D_i^{(n)}$ umso größer ist, je schlechter die Anpassung der iterativen Randwerte $m_{\alpha}^{(n)}$ an ihre zugehörigen gewünschten Randwerte mα für eine bestimmte Merkmalsgruppe Ai ist.

Folglich ergibt sich die Merkmalsgruppe mit der schlechtesten Anpassung, d.h. mit dem größten Korrekturbedarf, gemäß Verfahrensschritt S1/7 zu:

$$i(n) = \arg\max_{j} D_j^{(n)} \tag{9}$$

In Verfahrensschritt S1/8 wird die so ausgewählte Merkmalsgruppe Ai(n) mit dem größten Korrekturbedarf zur Berechnung der n+1 Iterationswerte für die freien Parameter λ z.B. gemäß der aus dem Stand der Technik bekannten und oben beschriebenen Gleichung (1) verwendet. Dabei wird während des n-ten Iterationsschrittes die Gleichung (1) für alle Merkmale α aus der ausgewählten Merkmalsgruppe Ai(n) berechnet, bevor der Iterationsparameter n um 1 erhöht wird Die Iterationswerte $\lambda_\alpha^{(n+1)}$ berechnen sich dann gemäß einem ersten Ausführungsbeispiel einer mathematischen Funktion G() zu:

$$\lambda_\alpha^{(n+1)} = G() = \lambda_\alpha^{(n)} + t_\alpha \cdot \log\left( \frac{m_\alpha}{m_\alpha^{(n)}} \cdot \frac{1 - \sum_{\beta \in Ai(n)} t_\beta . m_\beta^{(n)}}{1 - \sum_{\beta \in Ai(n)} t_\beta \cdot m_\beta} \right) \tag{10}$$

Eine derartige azyklische Berechnung der Iterationswerte $\lambda_\alpha^{(n+1)}$ bietet den Vorteil, dass unnötige Iterationsschritte vermieden werden, und dass auf diese Weise die Konvergenzgeschwindigkeit des GIS-Trainingsalgorithmus erheblich verbessert wird.

Nach der Berechnung des Iterationswertes $\lambda_\alpha^{(n+1)}$ erfolgt in Schritt S1/8 eine Neudefinition des Iterationsparameters n zu n = n+1.

Der gemäß Formel (8) berechnete und gemäß Schritt S1/8 von $\lambda_\alpha^{(n+1)}$ nach $\lambda_\alpha^{(n)}$ umdefinierte Iterationswert dient dann wieder zur Berechnung des aktuellen Iterationsrandwertes $m_\alpha^{(n)}$ in Schritt S1/3 gemäß Formel (4) in Verbindung mit den Formeln (5) und (6).

Die Konvergenzgeschwindigkeit des GIS-Trainingsalgorithmus hängt allerdings nicht nur von der Auswahl einer geeigneten Merkmalsgruppe für jeden Iterationsschritt n ab, sondern auch von der Merkmalsfunktion, mit welcher die Konvergenzschrittweiten tα und tβ sowie die iterativen Randwerte $m_\alpha^{(n)}$ und $m_\beta^{(n)}$ berechnet werden. So kann die Konvergenzgeschwindigkeit des GIS-Trainingsalgorithmus zusätzlich dadurch gesteigert werden, dass anstelle einer normalen Merkmalsfunktion gemäß Formel (3) eine orthogonalisierte Merkmalsfunktion $f_\alpha^{ortho}$ verwendet wird, welche folgendermaßen definiert ist:

$$f_\alpha^{ortho}(h,w) = \begin{cases} 1 & \text{wenn } \alpha \text{ das Merkmal mit der höchsten Reichweite in Ai ist, welches die Wortfolge (h,w) korrekt beschreibt} \\ 0 & \text{sonst} \end{cases} \tag{11}$$

Bei Einsetzen der orthogonalisierten Merkmalsfunktion $f_\alpha^{ortho}$ anstelle der normalen Merkmalsfunktion fα in die Formeln (4), (5),(6) und (8) und bei zusätzlicher Berechnung der gewünschten Randwerte $m_\alpha^{ortho}$ und $m_\beta^{ortho}$ durch Anwenden der orthogonalisierten Merkmalsfunktion $f_\alpha^{ortho}$ auf ein Trainingskorpus des Sprachmodells ergibt sich die Formel für den GIS-Trainingsalgorithmus in Analogie zu Formel (10) zu:

$$\lambda_\alpha^{ortho(n+1)} = \lambda_\alpha^{ortho(n)} + t_\alpha^{ortho} \cdot \log\left( \frac{m_\alpha^{ortho}}{m_\alpha^{ortho(n)}} \cdot \frac{1 - \sum_{\beta \varepsilon Ai(n)} t_\beta^{ortho} . m_\beta^{ortho(n)}}{1 - \sum_{\beta \varepsilon Ai(n)} t_\beta^{ortho} \cdot m_\beta^{ortho}} \right), \tag{12}$$

wobei auch die Berechnung dieser Formel vorzugsweise nicht zyklisch, sondern azyklisch gemäß dem in Fig 1 beschriebenen Verfahren erfolgt. Die rechte Seite der Gleichung (12) beschreibt ein zweites Ausführungsbeispiel für die mathematische Funktion G in Patentanspruch 1.

Die Berechnung der gewünschten Randwerte $m_\alpha^{ortho}$, welche durch die Iterationswerte $m_\alpha^{ortho(n)}$ approximiert werden sollen, erfolgt vorzugsweise gemäß:

$$m_\alpha^{ortho} = m_\alpha - \sum_{(*)} m_\beta^{ortho} \tag{13}$$

wobei (*) alle höher-reichweitigen Merkmale β umfasst, welche das Merkmal α einschließen und welche in derselben Merkmalsgruppe liegen wie α. Zur Berechnung des Randwertes $m_\beta^{ortho}$ ist die genannte Formel quasi rekursiv für jedes Merkmal β immer wieder anzuwenden, bis für bestimmte Merkmale, nämlich für jene mit der höchsten Reichweite, der Summenterm verschwindet, weil zu diesen Merkmalen keine höherreichweitigen Merkmale existieren. Die gewünschten orthogonalisierten Randwerte für die höchstreichweitigen Merkmale βk entsprechend dann jeweils den normalen gewünschten Randwerten mβk.

Ein Verfahren zur Berechnung der gewünschten orthogonalisierten Randwerte $m_{\alpha}^{ortho}$ gemäß Formel (13) ist in Fig 2a und 2b beschrieben.

Gemäß den Fig. 2a und 2b werden in einem ersten Verfahrensschritt S2/1 in dem Sprachmodell alle Merkmale βi mit i = 1 ... g bestimmt, welche eine sog. höhere Reichweite aufweisen als ein Merkmal α = β0, d.h. welche dieses an einer vorbestimmten Stelle einschließen und welche aus derselben Merkmalsgruppe stammen wie α. Anschließend wird in einem Verfahrensschritt S2/2 für alle Merkmale βi mit i = 0 ... g also auch für das Merkmal α = β0, ein gewünschter Randwert mβi berechnet.

Für die Berechnung des gewünschten Randwertes mβi sind verschiedene Methoden im Stand der Technik bekannt, wie oben nachfolgend zu Formel (2) beschrieben wurde.

In Verfahrensschritt S2/3 werden nachfolgend alle Merkmale βi nach ihrer Reichweite sortiert, wobei vorzugsweise dem Merkmal βi mit der größten Reichweite der Index i = g zugeordnet wird. Dabei kann es durchaus vorkommen, dass einzelnen Reichweiteklassen, also z.B. der Klasse Bigramme oder der Klasse Trigramme, mehrere Merkmale βi zugeordnet werden. In diesen Fällen sind mehrere Merkmale βi mit unterschiedlichen, aber aufeinanderfolgenden Indizes i ein und derselben Reichweiteklasse zugeordnet, d.h. diese Merkmale haben dann jeweils dieselbe Reichweite.

Für den Ablauf des Verfahrens, bei welchem in den nachfolgenden Schritten die einzelnen Merkmale βi der Reihe nach ausgewertet werden, ist es wichtig, dass in einem ersten Durchlauf n=0 des Verfahrens mit einem Merkmal βi begonnen wird, welches der höchsten Reichweitenklasse zugeordnet ist; vorzugsweise wird deshalb mit dem Merkmal βg begonnen (siehe Verfahrensschritte S2/4 und S2/5 in Fig 2a).

In einem nachfolgenden Verfahrensschritt S2/6 wird geprüft, ob es zu dem aktuell ausgewählten Merkmal βi (beim ersten Durchlauf n = 0 ist i = g), vorbestimmte höherreichweitigere Merkmale βk mit i < k < g gibt, welche das Merkmal βi einschließen. Beim ersten Durchlauf gehört das Merkmal βi, wie oben gesagt, automatisch der Klasse mit der höchsten Reichweite an und deshalb ist die Abfrage in Verfahrensschritt S2/6 für dieses Merkmal βi zu verneinen. In diesem Fall springt das Verfahren zu Verfahrensschritt S2/8, wo ein Parameter X zu Null gesetzt wird. Es erfolgt daraufhin eine Berechnung eines verbesserten gewünschten orthogonalisierten Randwertes $m_{\beta i}^{ortho}$ für das Merkmal βi gemäß Verfahrensschritt S2/9 in Fig. 2b. Wie dort ersichtlich, wird dieser Randwert für das Merkmal βi dem in Schritt S2/2 berechneten gewünschten Randwert mβi gleichgesetzt, wenn der Parameter X=0 ist.

Die Verfahrensschritte S2/5 bis S2/11 werden daraufhin sukzessive für alle Merkmale βi-1 mit i-1=g-1,g-2,..., 0 wiederholt. In Verfahrensschritt S2/10 findet eine dafür notwendige Neuinitialisierung des Indexes i statt und in Verfahrensschritt S2/11 erfolgt eine Abfrage, ob alle Merkmale βi mit i = 0 ... g abgearbeitet worden sind.

Für alle Merkmale βi, für welche vorbestimmte höher-reichweitige Merkmale βk mit i < k ≤ g existieren, ist die Abfrage in Verfahrensschritt S2/6 mit "Ja" zu beantworten. Der Parameter X wird dann nicht zu Null gesetzt, sondern berechnet sich gemäß Verfahrensschritt S2/7 durch Aufsummierung der entsprechenden, in vorherigen Durchläufen jeweils in Verfahrensschritt S2/9 berechneten verbesserten gewünschten orthogonalisierten Randwerte $m_{\beta k}^{ortho}$ für die jeweils höher-reichweitigen Merkmale βk.

Sobald in Verfahrensschritt S2/11 festgestellt worden ist, dass der gewünschte orthogonalisierte Randwert $m_{\beta 0}^{ortho}$ in Verfahrensschritt S2/9 berechnet worden ist, wird dieser in Verfahrensschritt S2/12 als $m_{\alpha}^{ortho}$ ausgegeben.

In Fig. 3 ist schließlich ein Spracherkennungssystem 10 gemäß der vorliegenden Erfindung dargestellt, welches auf Basis des sog. Maximum-Entropie-Sprachmodells arbeitet. Es umfasst eine Erkennungseinrichtung 12, welche den Bedeutungsinhalt von bereitgestellten Sprachsignalen zu erkennen versucht. Die Sprachsignale werden dem Spracherkennungssystem üblicherweise als Ausgangssignale eines Mikrophons 20 bereitgestellt. Die Erkennungseinrichtung 12 erkennt den Bedeutungsinhalt der Sprachsignale dadurch, dass sie Muster in dem empfangenen akustischen Signal auf vordefinierte Erkennungssymbole, wie z.B. bestimmte Wort, Handlungen oder Ereignisse, mit Hilfe des implementierten Maximum Entropie Sprach Modells MESM abbildet. Schließlich gibt die Erkennungseinrichtung 12 ein Ausgangssignal aus, welches den in dem Sprachsignal erkannten Bedeutungsinhalt repräsentiert und zur Ansteuerung von verschiedensten Geräten, z.B. eines Textverarbeitungsprogramms oder eines Telefons nach Maßgabe durch diesen Bedeutungsinhalt dienen kann.

Für eine möglichst fehlerfreie Ansteuerung der Geräte im Sinne des Bedeutungsinhaltes von steuernder Sprachinformation ist es erforderlich, dass das Spracherkennungssystem 10 die Bedeutungsinhalte der auszuwertende Sprache mit einer möglichst hohen Quote richtig erkennt. Dazu ist eine möglichst gute Anpassung Sprachmodells an die sprachlichen Besonderheiten des Sprechers, d.h. des Benutzers des Spracherkennungssystems erforderlich. Diese Anpassungsaufgabe leistet eine Trainingseinrichtung 14, welche entweder extern oder in das Spracherkennungssystem 10 integriert betrieben werden kann. Genauer gesagt dient die Trainingseinrichtung 14 zum Anpassen des MESM in dem Spracherkennungssystem 10 an wiederkehrende statistische Muster in der Sprache eines bestimmten Benutzers.

Sowohl die Erkennungseinrichtung 12 wie auch die Trainingseinrichtung 14 sind üblicherweise, aber nicht notwendigerweise, als Softwaremodule ausgebildet und laufen auf einem geeigneten Computer (nicht gezeigt) ab.

## Patentansprüche

1. Verfahren zum Berechnen von Iterationswerten für freie Parameter $\lambda\alpha$ in dem Maximum Entropie Sprachmodell gemäß dem folgenden allgemeinen Trainingsalgorithmus:

$$\lambda_\alpha^{(n+1)}\Big|_{\alpha\in Ai(n)} = G(\lambda_\alpha^{(n)}, m_\alpha, m_\alpha^{(n)}, \ldots)\Big|_{\alpha\in Ai(n)}$$

wobei:

n : einen Iterationsparameter, welcher einen aktuellen Iterationsschritt repräsentiert;
Ai : die i'te Merkmalsgruppe in dem Sprachmodell mit $1 \le i \le m$;
Ai(n) : die in dem n'ten Iterationsschritt ausgewählte Merkmalsgruppe;
$\alpha$ : ein Merkmal in dem Sprachmodell;
G : eine mathematische Funktion;
$\lambda_\alpha^{(n)}$ : den n'ten Iterationswert für den freien Parameter $\lambda\alpha$;
$m_\alpha$ : einen gewünschter Randwert für das Merkmal $\alpha$; und
$m_\alpha^{(n)}$ : den n'ten Iterationsrandwert für den gewünschten Randwert ma;

bezeichnet,
wobei jedem Iterationsparameter n eine Merkmalsgruppe Ai(n) von insgesamt m Merkmalsgruppen des Sprachmodells zugeordnet ist, und wobei die Iterationswerte $\lambda_\alpha^{(n+1)}$ jeweils für alle Merkmale $\alpha$ aus der aktuell zugeordneten Merkmalsgruppe Ai(n) berechnet werden;
**<u>dadurch gekennzeichnet,</u>**
**dass** dem aktuellen Iterationsparameter n jeweils diejenige Merkmalsgruppe Ai(n) mit $1 \le i(n) \le m$ zugeordnet wird, für welche, gemäß einem vorbestimmten Kriterium, die Anpassung der Iterationsrandwerte $m_\alpha^{(n)}$ an die jeweils zugehörigen gewünschten Randwerte $m\alpha$ am schlechtesten im Vergleich zu allen m Merkmalsgruppen des Sprachmodells erfüllt ist.

2. Verfahren nach Anspruch 1,
**<u>dadurch gekennzeichnet,</u>**
**dass** es vor jeder Erhöhung des Iterationsparameters n folgende Schritte zur Berechnung und Auswertung des Kriteriums umfasst:

a) Berechnen von aktuellen Iterationsrandwerten $m_\alpha^{(n)}$ für die Merkmale $\alpha$ aller Merkmalsgruppen Ai mit $i \le i \le m$ des Sprachmodells gemäß der folgenden Formel:

$$m_\alpha^{(n)} = \sum_{(h,w)} N(h)\cdot p^{(n)}(w|h)\cdot f_\alpha(h,w)$$

wobei $N(h)$ : die Häufigkeit beschreibt, mit welcher die Wortfolge h (Historie) in einem Trainingskorpus des Sprachmodells vorkommt;
p(n) (w | h) : ein Iterationswert für die Wahrscheinlichkeit ist, mit welcher das Wort w auf die Historie h folgt; und
$f\alpha$ (h,w) : eine Merkmalsfunktion für das Merkmal $\alpha$ repräsentiert;

b) Auswählen derjenigen Merkmalsgruppe Ai(n), für welche die Iterationsrandwerte $m_\alpha^{(n)}$ am schlechtesten an die zugehörigen Randwerte $m\alpha$ angepasst sind durch Ausführen der folgenden Schritte:

bi) für jede Merkmalsgruppe Ai: Berechnen des Kriteriums $D_i^{(n)}$ gemäß folgender Formel:

$$D_i^{(n)} = \left[ \sum_{\alpha \in Ai} t_\alpha \cdot m_\alpha \cdot \log\left( \frac{m_\alpha}{m_\alpha^{(n)}} \right) + \left( 1 - \sum_{\alpha \in Ai} t_\alpha \cdot m_\alpha \right) \cdot \log\left( \frac{1 - \sum_{\alpha \in Ai} t_\alpha \cdot m_\alpha}{1 - \sum_{\alpha \in Ai} t_\alpha \cdot m_\alpha^{(n)}} \right) \right];$$

bii) Auswählen der Merkmalsgruppe Ai(n) mit dem größten Wert für das Kriterium $D_i^{(n)}$ gemäß:

$$i(n) = \arg\max_j D_j^{(n)} \qquad (7);$$

biii) Aktualisieren des Parameters $\lambda_\alpha^{(n+1)}$ für alle Merkmale $\alpha$ aus der ausgegewählten Merkmalsgruppe Ai(n); und

c) Wiederholen der Schritte a) und b) in jedem weiteren Iterationsschritt, solangs bis alle Randwerte $m_\alpha^{(n+1)}$ eine gewünschte Konvergenzgenauigkeit erreicht haben.

**3.** Verfahren nach Anspruch 2,
<u>**dadurch gekennzeichnet,**</u>
**dass** vor der erstmaligen Durchführung der Schritte a) - c) gemäß Anspruch 2 folgende Initialisierungsschritte durchgeführt werden:

a') Bestimmen von Werten für die Konvergenzschrittweiten $t\alpha$; und

a'') Initialisieren von p(0)(w|h) mit einem beliebigen Satz von Parametern $\lambda_\alpha^{(0)}$.

**4.** Verfahren nach Anspruch 3,
<u>**dadurch gekennzeichnet,**</u>
**dass** in Schritt a') die Werte der Konvergenzschrittweiten $t\alpha$ für jede Merkmalsgruppe Ai wie folgt berechnet werden:

$$t_\alpha = \frac{1}{M_i} \quad \text{mit} \quad M_i = \max_{(h,w)} \left( \sum_{\alpha \varepsilon A_i} f_\alpha(h,w) \right)$$

**5.** Verfahren nach einem der vorangegangenen Ansprüche,
<u>**dadurch gekennzeichnet,**</u>
**dass** die Funktion G einen Generalized Iterativ Scaling GIS-Trainingsalgorithmus repräsentiert und folgendermaßen definiert ist:

$$\lambda_\alpha^{(n+1)} = G = \lambda_\alpha^{(n)} + t_\alpha \cdot \log\left( \frac{m_\alpha}{m_\alpha^{(n)}} \cdot \frac{1 - \sum_{\beta \in Ai(n)} t_\beta . m_\beta^{(n)}}{1 - \sum_{\beta \in Ai(n)} t_\beta \cdot m_\beta} \right),$$

wobei $\alpha$ ein bestimmtes und $\beta$ alle Merkmale aus der ausgewählten Merkmalsgruppe Ai(n) bezeichnet.

**6.** Verfahren nach einem der Ansprüche 2 bis 5,
<u>**dadurch gekennzeichnet,**</u>
**dass** die Merkmalsfunktion $f\alpha$ eine orthogonalisierte Merkmalsfunktion $f_\alpha^{ortho}$ ist, welche wie folgt definiert ist:

$$f_{\alpha}^{ortho}(h,w) = \begin{cases} 1 & \text{wenn } \alpha \text{ das Merkmal mit der höchsten Reichweite in Ai ist, welches die Wortfolge (h,w) korrekt beschreibt} \\ 0 & \text{sonst} \end{cases}$$

**7.** Verfahren nach Anspruch 6,
**dadurch gekennzeichnet,**
**dass** der gewünschte orthogonalisierte Randwert $m_{\alpha}^{ortho}$ berechnet wird gemäß:

$$m_{\alpha}^{ortho} = m_{\alpha} - \sum_{(*)} m_{\beta}^{ortho}$$

wobei (*) alle höher-reichweitigen Merkmale β umfasst, welche das Merkmal α einschließen und welche aus derselben Merkmalsgruppe stammen wie α.

**8.** Spracherkennungssystem (10) mit:

einer Erkennungseinrichtung (12) zum Erkennen des Bedeutungsinhaltes eines von einem Mikrophon (20) aufgenommenen und bereitgestellten akustischen Signals, insbesondere eines Sprachsignals, durch Abbilden von Teilen dieses Signals auf vordefinierte Erkennungssymbole, wie sie von dem implementierten Maximum Entropie Sprach Modell MESM angeboten werden, und zum Erzeugen von Ausgangssignalen, welche den erkannten Bedeutungsinhalt repräsentieren; und
einer Trainingseinrichtung (14) zum Anpassen des MESM an wiederkehrende statistische Muster in der Sprache eines bestimmten Benutzers des Spracherkennungssystems (10);

**dadurch gekennzeichnet,**
**dass** die Trainingseinrichtung (14) freie Parameter λ in dem MESM gemäß dem Verfahren nach Anspruch 1 berechnet.

**9.** Trainingseinrichtung (14) zum Anpassen des Maximum Entropie Sprach Modells MESM in einem Spracherkennungssystem (10) an wiederkehrende statistische Muster in der Sprache eines bestimmten Benutzers des Spracherkennungssystems (10),
**dadurch gekennzeichnet,**
**dass** die Trainingseinrichtung (14) freie Parameter λ in dem MESM gemäß dem Verfahren nach Anspruch 1 berechnet.

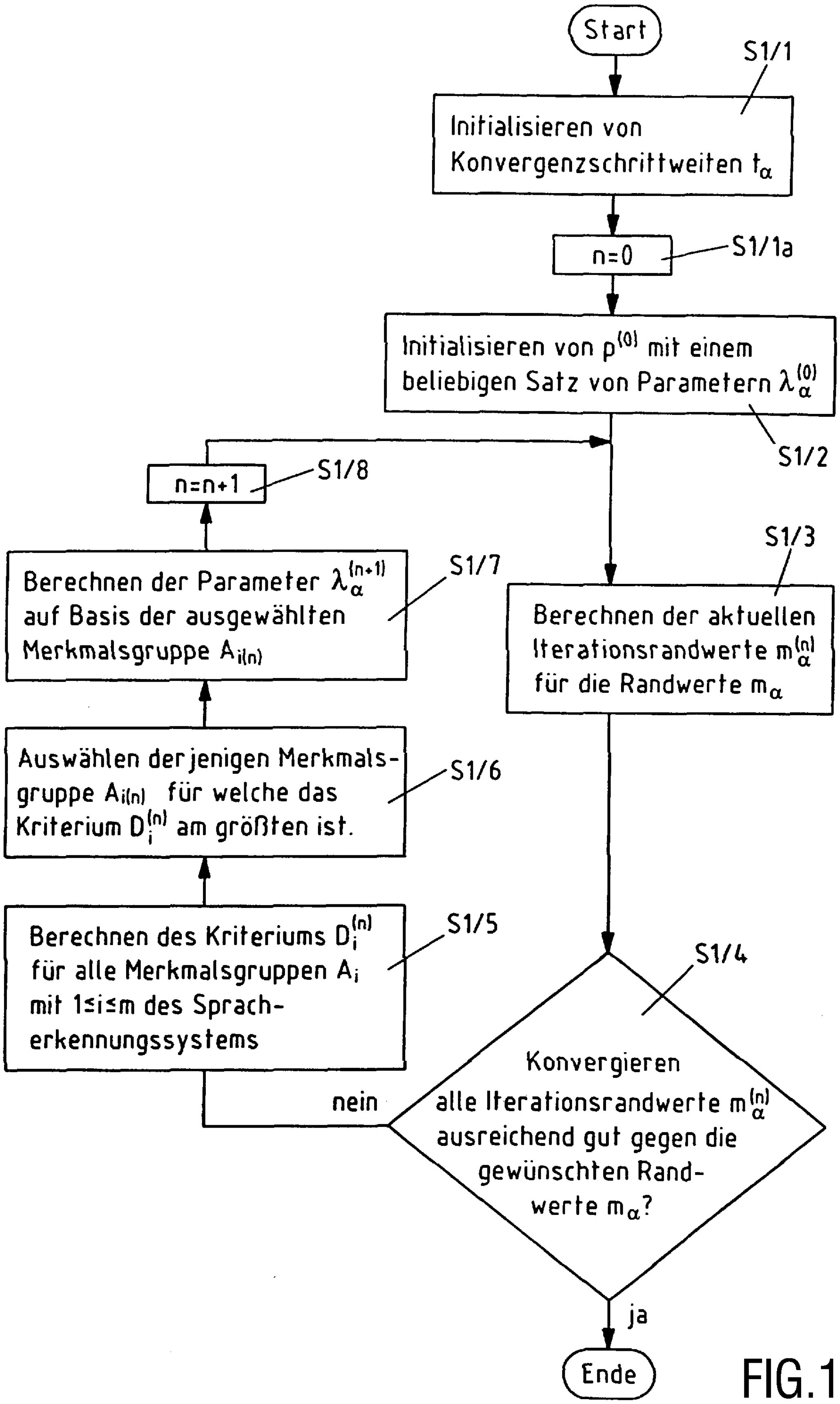
Start
S1/1
Initialisieren von Konvergenzschrittweiten $t_\alpha$
n=0
S1/1a
Initialisieren von $p^{(0)}$ mit einem beliebigen Satz von Parametern $\lambda_\alpha^{(0)}$
S1/2
n=n+1
S1/8
Berechnen der Parameter $\lambda_\alpha^{(n+1)}$ auf Basis der ausgewählten Merkmalsgruppe $A_{i(n)}$
S1/7
S1/3
Berechnen der aktuellen Iterationsrandwerte $m_\alpha^{(n)}$ für die Randwerte $m_\alpha$
Auswählen derjenigen Merkmals-gruppe $A_{i(n)}$ für welche das Kriterium $D_i^{(n)}$ am größten ist.
S1/6
Berechnen des Kriteriums $D_i^{(n)}$ für alle Merkmalsgruppen $A_i$ mit $1 \le i \le m$ des Sprach-erkennungssystems
S1/5
S1/4
nein
Konvergieren alle Iterationsrandwerte $m_\alpha^{(n)}$ ausreichend gut gegen die gewünschten Rand-werte $m_\alpha$?
ja
Ende

FIG.1

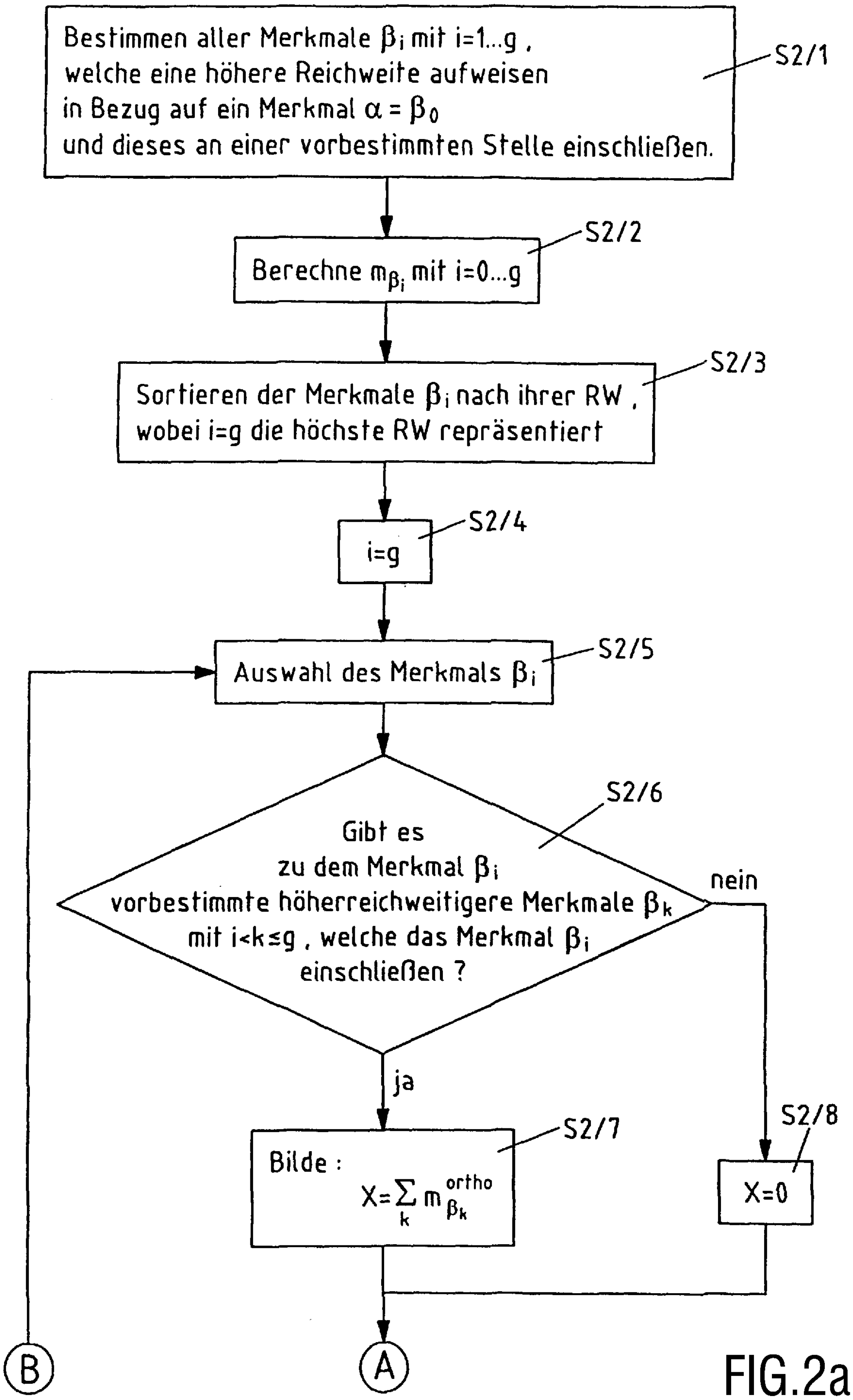

Bestimmen aller Merkmale $\beta_i$ mit i=1...g, welche eine höhere Reichweite aufweisen in Bezug auf ein Merkmal $\alpha = \beta_0$ und dieses an einer vorbestimmten Stelle einschließen.
S2/1
Berechne $m_{\beta_i}$ mit i=0...g
S2/2
Sortieren der Merkmale $\beta_i$ nach ihrer RW, wobei i=g die höchste RW repräsentiert
S2/3
i=g
S2/4
Auswahl des Merkmals $\beta_i$
S2/5
Gibt es zu dem Merkmal $\beta_i$ vorbestimmte höherreichweitigere Merkmale $\beta_k$ mit $i<k\leq g$, welche das Merkmal $\beta_i$ einschließen ?
S2/6
nein
ja
Bilde : $X=\sum_k m_{\beta_k}^{ortho}$
S2/7
S2/8
X=0
B
A


FIG.2a

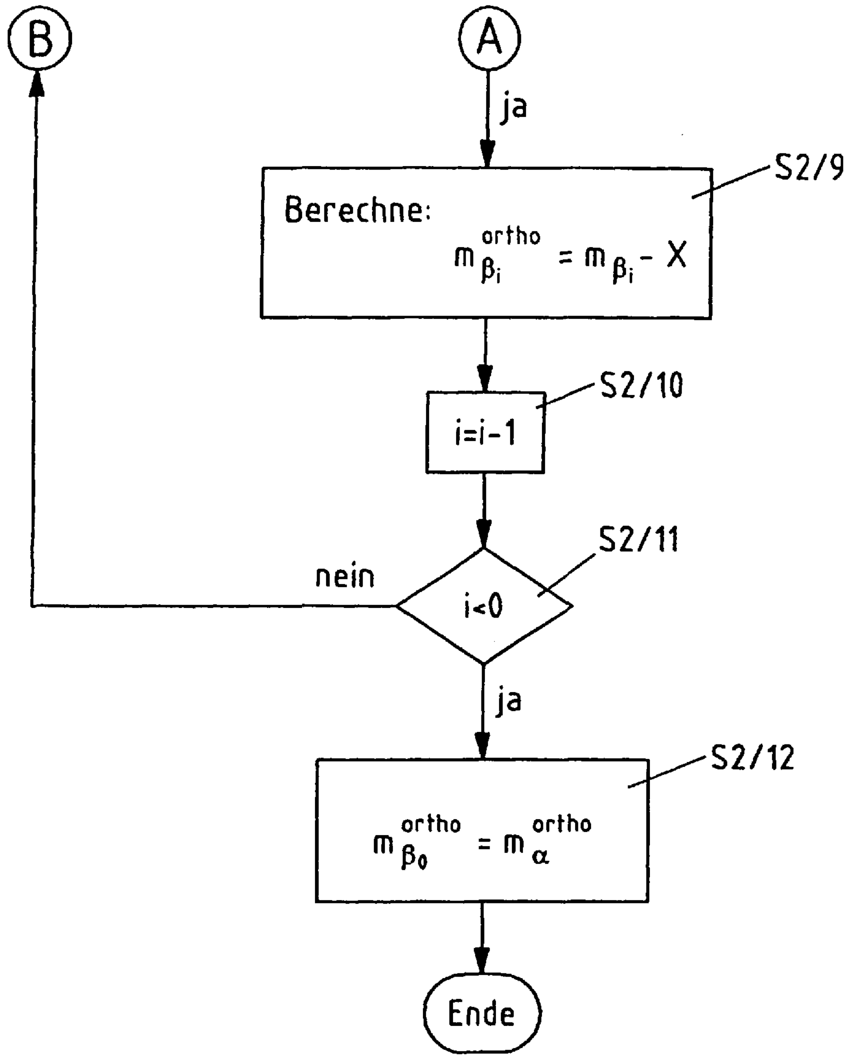
B
A
ja
S2/9
Berechne:
$m_{\beta_i}^{ortho} = m_{\beta_i} - X$
S2/10
i=i-1
S2/11
nein
i<0
ja
S2/12
$m_{\beta_0}^{ortho} = m_{\alpha}^{ortho}$
Ende

FIG.2b

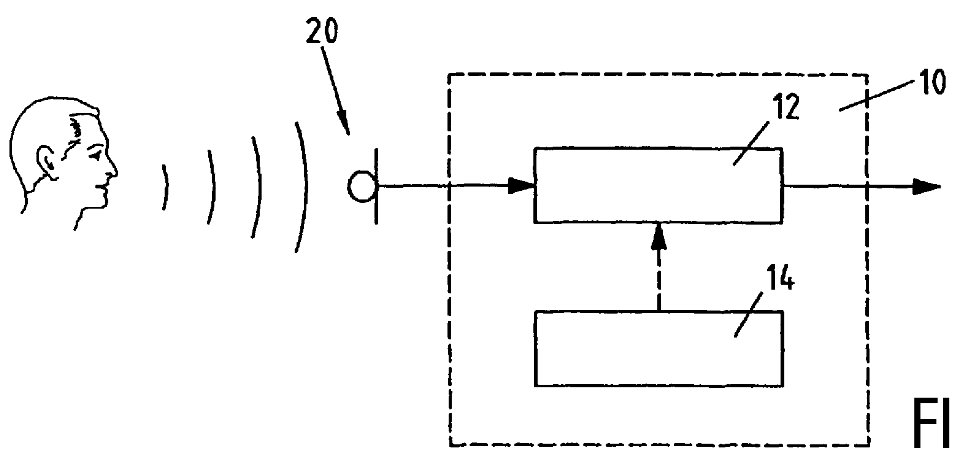
20
10
12
14

FIG.3

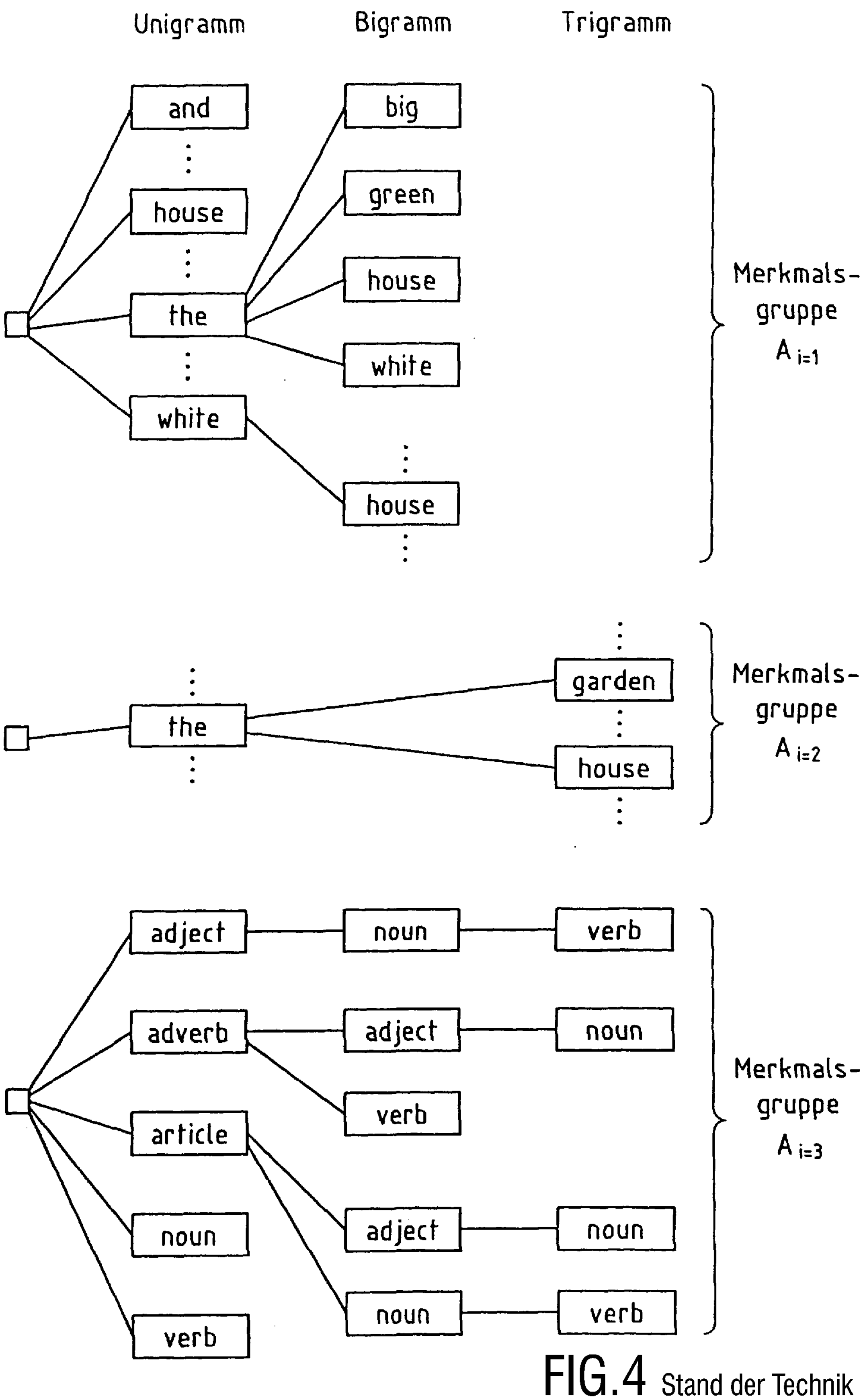


FIG.4 Stand der Technik

Europäisches Patentamt

# EUROPÄISCHER RECHERCHENBERICHT

Nummer der Anmeldung
EP 02 10 0120

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | J. PETERS AND D. KLAKOW: "Compact maximum entropy language models"<br>ASRU'99,<br>12. - 15. Dezember 1999, XP002196814<br>Keystone, Colorado<br>* Zusammenfassung *<br>* section "2. maximum entropy models" *<br>* section "3. GIS training" *<br>--- | 1-9 | G10L15/18 |
| A | J. WU AND S. KHUDANPUR: "Efficient training methods for a maximum entropy language modeling"<br>PROCEEDINGS ICSLP'2000,<br>Bd. 3, Oktober 2000 (2000-10), Seiten 114-117, XP002196896<br>Beijing, China<br>* das ganze Dokument *<br>--- | 1-9 | |
| A | SIMONS M ET AL: "Distant bigram language modelling using maximum entropy"<br>ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US,<br>21. April 1997 (1997-04-21), Seiten 787-790, XP010225912<br>ISBN: 0-8186-7919-0<br>* Zusammenfassung *<br>* section "3. GIS ALGORITHM" *<br>--- | 1-9 | RECHERCHIERTE SACHGEBIETE (Int.Cl.7)<br>G10L |
| A | US 6 049 767 A (PRINTZ )<br>11. April 2000 (2000-04-11)<br>* Zusammenfassung *<br>----- | 1-9 | |

Der vorliegende Recherchenbericht wurde für alle Patentansprüche erstellt

| Recherchenort | Abschlußdatum der Recherche | Prüfer |
|---|---|---|
| DEN HAAG | 22. April 2002 | Quélavoine, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 02 10 0120

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-04-2002

| Im Recherchenbericht angeführtes Patentdokument | Datum der Veröffentlichung | Mitglied(er) der Patentfamilie | Datum der Veröffentlichung |
|---|---|---|---|
| US 6049767 A | 11-04-2000 | KEINE | |

EPO FORM P0461

Für nähere Einzelheiten zu diesem Anhang : siehe Amtsblatt des Europäischen Patentamts, Nr.12/82